# EUROPEAN PATENT APPLICATION

(11) **EP 2 733 416 A1**
(43) Date of publication of application: **21.05.2014**
(21) Application number: 12876076.6
(22) Date of filing: 18.07.2012
(51) Int. Cl.: F21V 23/00, H05B 37/02, F21Y 101/02

(54) **LED LIGHT AND LED LIGHTING SYSTEM**

(30) Priority: 12.06.2012 CN 201210196628
(71) Applicant: Zhejiang Shenghui Lighting Co., Ltd, Jiaxing, Zhejiang 314501 (CN)
(72) Inventor: RUAN, Jiayang, Jiaxing Zhejiang 314015 (CN); SHEN, Jinxiang, Jiaxing Zhejiang 314015 (CN)
(74) Representative: Chaillot, Geneviève
(86) International application number: PCT/CN2012/078791
(87) International publication number: WO 2013/185402

(57) **Abstract**

The present invention discloses an LED lamp and LED illumination system, wherein the LED lamp comprises LED light-emitting element, LED driver circuit and Wi-Fi routing module with routing function that receives and transmits Wi-Fi signals, in which the LED driver circuit is connected to the LED light-emitting element and Wi-Fi routing module respectively; the LED illumination system consists of at least two above mentioned LED lamp units, each unit transmitting the Wi-Fi signals it receives to other units within the reach of its Wi-Fi signals. The LED lamp referred in this invention makes a lamp work also as wireless router, or wireless hub. Therefore, as long as one lamp receives a signal, the signal will be passed on one after another, extending constantly the covering range of the wireless network, thereby breaking through the limit of transmission distance and penetration capability of Wi-Fi signals.

## Description

### FIELD OF THE INVENTION

This invention relates to the technical field of LED illumination, more particularly, to an LED lamp and illumination system with Wi-Fi routing function.

### BACKGROUND OF THE INVENTION

Intelligent illumination device and system remains to be the research subject for new generation of illumination solutions throughout. Conventional concepts refer to no other than the following:
1. To obtain external conditions by sensor, for instance, photosensor is used to measure ambient brightness so as to turn on / off the lamp automatically.
2. To read the state of lamp by wired network, thereby knowing and controlling lamp switch box of the building thus adjusting the brightness.
3. To control the lamp equipped with wireless receipt and transmission function by wireless signals such as Wi-Fi, thus realizing remote control.

Among the control methods described above, Wi-Fi wireless control is growing in popularity among consumers thanks to its facility in application with no additional requirements for lamp installation and wiring. However, conventional Wi-Fi wireless control method is restricted by obstacles, transmission distance and transmission power, resulting in limited covering range, thereby restraining its convenience and reliability.

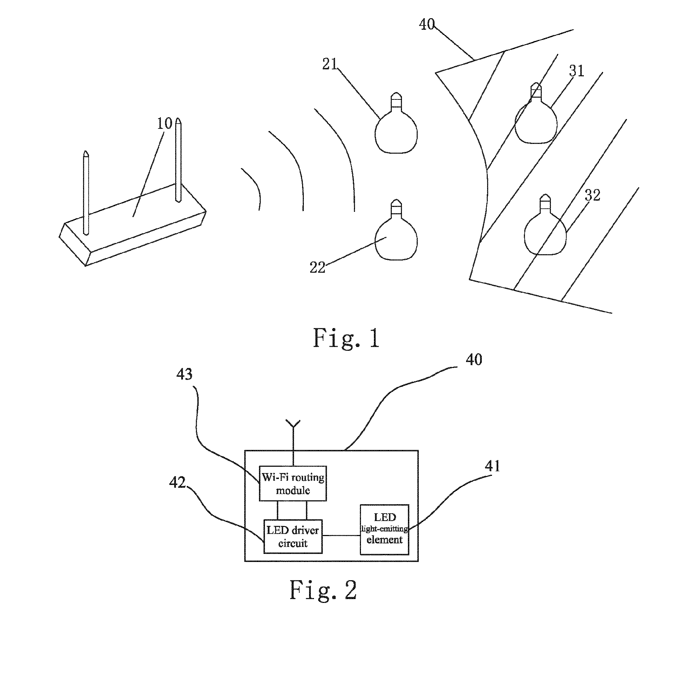

FIG. 1 illustrates the above mentioned conventional illumination system based on Wi-Fi control, including an external Wi-Fi router 10, wherein illumination devices 21 and 22 are covered by its signals while illumination devices 31 and 32 stay in no-signal zone 40 out of reach of effective Wi-Fi signals due to distance, obstacles, etc. Besides, in the above mentioned wireless control method, the wireless connection between router and lamp is star-like structured, wherein there is no information transmission between one lamp and another, thereof restraining physically the transmission distance of wireless signals.

### SUMMARY OF THE INVENTION

To overcome the defects of the above mentioned prior art, this invention provides an LED lamp with Wi-Fi routing function, which can be connected to Internet and LAN either separately or in the manner of Ad hoc network, thus making it easier to know about and remote control the lamp.

The technical scheme of this invention is realized as below:
An LED lamp, comprising at least one light-emitting element, at least one LED driver circuit, and at least one Wi-Fi routing module with routing function that receives and transmits Wi-Fi signals, wherein the said LED driver circuit is connected to the light-emitting element and Wi-Fi routing module respectively.

Preferably, the said Wi-Fi routing module is connected to Internet or LAN through Wi-Fi signals.

Preferably, the said Wi-Fi routing module is mounted either inside or outside of the LED lampshell.

Preferably, the operating frequency of the said Wi-Fi routing module is 2.4GHZ or 5GHZ.

An LED illumination system, consisting of at least two previously mentioned LED lamp units, each unit transmitting the Wi-Fi signals it receives to other units within the reach of its Wi-Fi signals. Each LED lamp works as a Wi-Fi router, transmitting the Wi-Fi signals it receives, bridging other LED lamps covered by its Wi-Fi signals, thus forming a net-like structured wireless network based on Wi-Fi.

Preferably, the system is connected to Internet or LAN through Wi-Fi signals.

Preferably, the system includes also a control terminal for status reading and remote control of the units within this system, wherein the said control terminal is connected to each unit through Wi-Fi signals.

Preferably, the said control terminal can be computer, tablet PC or smart phone.

The design philosophy and benefits of this invention by adopting above mentioned technical scheme lie in:
The LED lamp referred in this invention makes a lamp work also as wireless router, or wireless hub. Therefore, as long as one lamp receives a signal, the signal will be passed on one after another, extending constantly the covering range of the wireless network, thereby breaking through the limit of transmission distance and penetration capability of Wi-Fi signals.

Besides, the LED illumination device described in this invention, no matter it's a single lamp body or a lamp consisting of a plurality of lamp bodies, can be connected to Internet and LAN either separately or in the manner of Ad hoc network via Wi-Fi, thus making it easier and prompter to know about and remote control the lamp.

### BRIEF DESCRIPTION OF THE DRAWINGS

FIG. 1 is a schematic diagram of conventional illumination system based on wireless control;
FIG. 2 is a schematic diagram of the LED lamp referred in this invention;
FIG. 3 is a schematic diagram of the LED illumination system referred in this invention.

### DETAILED DESCRIPTION OF THE PREFERRED EMBODIMENTS

Detailed description of the preferred embodiments of this invention as below:
Embodiment: As illustrated in FIG. 2, LED lamp 40 in this invention comprises an LED light-emitting element 41, an LED driver circuit 42 and a Wi-Fi routing module 43, wherein the said Wi-Fi routing module 43 and LED driver circuit 42, LED driver circuit 42 and LED light-emitting element 41 are electrically connected, wherein the working frequency of Wi-Fi routing module 43 can either be 2.4GHz or 5GHz. The said Wi-Fi routing module 43 can be installed inside the lampshell, while if it's integrated into one circuit board with LED driver circuit 42, it can be mounted to the surface of lampshell, or placed outside the lamp body. The electrical connection between Wi-Fi routing module 43 and LED driver circuit 42 is able to detect the state of LED lamp, such as switch status of the lamp and light intensity. In the meanwhile it's also possible to input the signals received by Wi-Fi routing module 43 to the control port of LED driver circuit 42, thereof being able to control the state of lamp and adjust the brightness. Furthermore, the Wi-Fi routing module sends out PWM signals to the dimming control input terminal of LED driver circuit to realize dimming function.

Additionally, LED lamp 40 refers not only to single light source such as a single lamp bulb, but also a lamp consisting of a plurality of lamp bulbs, of which the driver circuits can be connected to one same Wi-Fi routing module as well, thereof detecting and controlling the state of lamp.

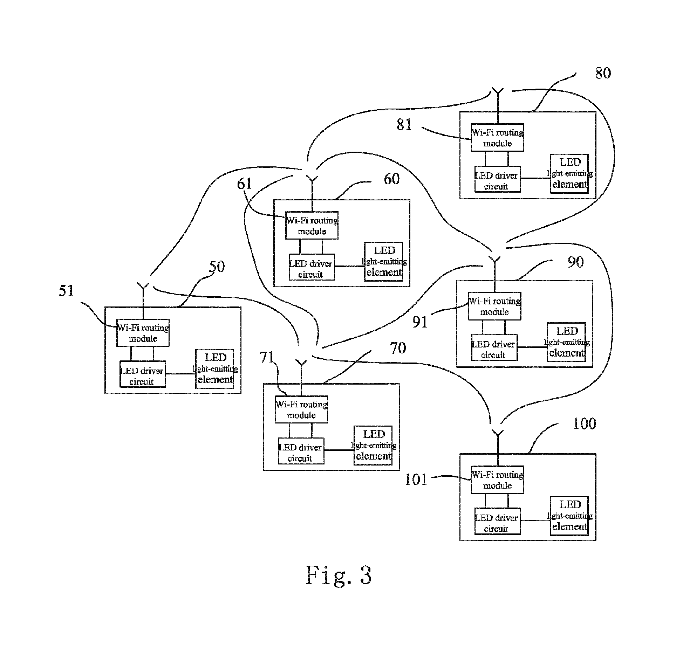

FIG. 3 illustrates the LED illumination system of this invention, wherein 50, 60, 70, 80, 90 and 100 refer to the above mentioned LED lamp. LED lamp 50 is connected to Wi-Fi routing module 61, 71 of LED lamp 60, 70 which are covered by its signals through its Wi-Fi routing module 51; LED lamp 60 and 70 are also connected via Wi-Fi. Meanwhile, LED lamp 60, 70, as Wi-Fi router, connect LED lamp 50 with distant LED lamp 80, 90 and 100 respectively, thus forming a bridged network structure, and analogously creating a net-like Wi-Fi network. Therefore, the Wi-Fi network is extended, breaking through the limit of signal distance and penetration capability of single Wi-Fi router. As long as one lamp receives command, it will be passed on and on to each unit of the whole net-like Wi-Fi network, making the wireless control easier in large buildings like office building and shopping mall.

The Wi-Fi network shown in FIG. 3 can be connected to Internet or LAN, making status detection and remote control possible for customers through the terminal connected to this network. For instance, smart phone can be used to switch on / off the LED lamp, adjust its brightness, color or hue via particular application.

The operating principle and core of this invention is: breaking through the limit of Wi-Fi network covering range by using Wi-Fi routing function and Ad hoc network of the illumination device; enabling the Ad hoc network to connect to Internet and LAN; electrically connecting control terminal and Wi-Fi routing module, to realize remote control and adjustment of lamp state via network.

## Claims

1. An LED lamp, **characterizing in that** it comprises at least one LED light-emitting element, at least one LED driver circuit, and at least one Wi-Fi routing module with routing function that receives and transmits Wi-Fi signals, wherein the said LED driver circuit is connected to the LED light-emitting element and Wi-Fi routing module respectively.

2. An LED lamp as set forth in claim 1, **characterizing in that** the said Wi-Fi routing module is connected to Internet or LAN through Wi-Fi signals.

3. An LED lamp as set forth in claim 1, **characterizing in that** the said Wi-Fi routing module is mounted either inside or outside of the LED lampshell.

4. An LED lamp as set forth in claim 1, **characterizing in that** the operating frequency of the said Wi-Fi routing module is 2.4GHZ or 5GHZ.

5. An LED illumination system, **characterizing in that** it consists of at least two LED lamp units as described in claim 1, each unit transmitting the Wi-Fi signals it receives to other units within the reach of its Wi-Fi signals.

6. An LED illumination system as set forth in claim 5, **characterizing in that** the system is connected to Internet or LAN through Wi-Fi signals.

7. An LED illumination system as set forth in claim 5, **characterizing in that** it includes also a control terminal for status reading and remote control of the units within this system, wherein the said control terminal is connected to each unit through Wi-Fi signals.

8. An LED illumination system as set forth in claim 7, **characterizing in that** the said control terminal can be computer, tablet PC or smart phone.
